(19) Europäisches Patentamt
European Patent Office
Office européen des brevets

(11) **EP 2 465 330 B1**

(12) **EUROPÄISCHE PATENTSCHRIFT**

(45) Veröffentlichungstag und Bekanntmachung des Hinweises auf die Patenterteilung:
**30.10.2013 Patentblatt 2013/44**

(21) Anmeldenummer: **10740578.9**

(22) Anmeldetag: **23.07.2010**

(51) Int Cl.:
*H02M 1/32* (2007.01)     *H02M 1/42* (2007.01)
*H05B 41/28* (2006.01)     *H05B 41/285* (2006.01)

(86) Internationale Anmeldenummer:
**PCT/EP2010/060721**

(87) Internationale Veröffentlichungsnummer:
**WO 2011/018324 (17.02.2011 Gazette 2011/07)**

(54) **VERFAHREN ZUR REGELUNG EINES SPANNUNGSWANDLERS ZUM ÜBERSPANNUNGSSCHUTZ DURCH ABMAGNETISIERUNGSZEIT DER INDUKTOR, SPANNUNGSWANDLER SOWIE BETRIEBSGERÄT MIT EINEM SPANNUNGSWANDLER**

METHOD FOR CONTROLLING A CONVERTER FOR OVERVOLTAGE PROTECTION USING INDUCTOR DEMAGNETIZING TIME, CONVERTER AND BALLAST HAVING A CONVERTER

PROCÉDÉ DE RÉGULATION D'UN CONVERTISSEUR AUX FINS DE PROTECTION CONTRE LES SURTENSIONS PAR USAGE DE PERIODE DE DEMAGNITISATION D'INDUCTEUR, CONVERTISSEUR, ET ÉQUIPEMENT COMPORTANT UN CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **10.08.2009 DE 102009036861**

(43) Veröffentlichungstag der Anmeldung:
**20.06.2012 Patentblatt 2012/25**

(73) Patentinhaber: **OSRAM GmbH**
**80807 München (DE)**

(72) Erfinder: **STORM, Arwed**
**85221 Dachau (DE)**

(56) Entgegenhaltungen:
**EP-A2- 1 397 029     EP-A2- 1 526 622**

## Beschreibung

## Technisches Gebiet

Die Erfindung geht aus von einem Verfahren zur Regelung eines Spannungswandlers zum Betreiben einer schaltbaren Last, mit mindestens einer Induktivität und einem Schalter, der mittels einer digitalen Steuerungseinrichtung angesteuert wird.

## Stand der Technik

Die Erfindung geht aus von einem Verfahren zur Regelung eines Spannungswandlers zum Betreiben einer schaltbaren Last nach der Gattung des Hauptanspruchs. In elektronischen Wandlern, die eine aktive Leistungsfaktorkorrekturschaltung aufweisen, ist die Wahl der Zwischenkreisspannung von großer Bedeutung hinsichtlich der Funktionalität und der Kosten. Diese Wandler sind meist als einfache Hochsetzsteller ohne galvanische Trennung (sog. Flyback-Topologie) aufgebaut. Sie werden üblicherweise an der Lückgrenze betrieben, dass heißt zwischen lückendem und nichtlückendem Betrieb. Es besteht das Problem, dass bei knapper und kostengünstiger Bauteiledimensionierung ein bestimmter Wert der Zwischenkreisspannung nicht überschritten werden darf, da sonst Bauteile wie der Zwischenkreiskondensator überlastet werden und dauerhaften Schaden nehmen können. Bei einer leicht erhöhten Eingangsspannung, kann der Wandler durch entsprechende Ansteuerung des Schalters die Zwischenkreisspannung noch konstant halten. Ist die Eingangsspannung stark erhöht, z.B. aufgrund eines Fehlers im Stromnetz, so kann der Wandler die Zwischenkreisspannung nicht mehr ausregeln, und die Zwischenkreisspannung steigt. Dies belastet Bauteile wie z.B. den Zwischenkreiskondensator. Wird an dem elektrischen Wandler eine nicht zeitkontinuierliche Last betrieben, so wird der Zwischenkreiskondensator zusätzlich zur erhöhten Zwischenkreisspannung mit einem Spannungs- und Stromrippel beaufschlagt. Dieser überlastet das Bauteil in vielen Fällen, so dass eine irreversible Schädigung des Bauteils nicht ausgeschlossen ist. Daher ist in solchen Wandlern oftmals eine Überspannungsabschaltung implementiert. Durch geeignete Abschaltkriterien lassen sich die Bauteilebelastungen, insbesondere die Strom- und Spannungsbelastung des Zwischenkreiskondensators bei anormalen Betriebsbedingungen reduzieren. Bei elektrischen Wandlern nach dem Stand der Technik wird der Mittelwert der Zwischenkreisspannung erfasst. Diese Spannung ist ja, wie oben schon erwähnt die Ausgangsspannung des elektrischen Wandlers. Überschreitet der Mittelwert dieser Spannung als Folge einer erhöhten Eingangsspannung, die sich nicht mehr durch den elektrischen Wandler ausregeln lässt einen Wert von 109% des Nennwertes, so wird das gesamte Gerät einschließlich der Last abgeschaltet. Dazu ist es notwendig, dass die Last abschaltbar ist. In vielen Anwendungsfällen, wie z.B. bei einem elektronischen Betriebsgerät für Gasentladungslampen ist dies kein Problem, da dem Wandler ein Wechselrichter nachgeschaltet ist, der die eigentliche Last, eine Gasentladungslampe betreibt. Dieser Wechselrichter kann leicht abgeschaltet werden, um das gesamte Betriebsgerät vor der zu hohen Eingangsspannung zu schützen. Durch das Abschalten der Last tritt kein Ripplestrom und keine Ripplespannung mehr auf, was die Bauteile des Wandlers, insbesondere den Zwischenkreiskondensator schützt. Das Problem dieser bekannten Abschaltung besteht nun darin, dass diese erst sehr spät eingreift, und die Bauteile damit nicht auf einen gewünscht niedrigen Wert dimensioniert werden können. Zum Beispiel greift die bekannte Abschaltung für Anwendungen mit in Europa üblicher Netzspannung von 230V Wechselspannung erst bei einer Eingangswechselspannung von 340V. Dies stellt eine hohe Belastung für viele Bauteile des Wandlers dar.

Eine bekannte Schaltungsanordnung wird in dem Dokument EP-A2-1 397 029 offenbart. Es offenbart eine Schaltungsanordnung zum Betrieb von Entladungslampen. Die Schaltungsanordnung umfasst einen Spannungswandler (Hochsetzsteller) die eine Überspannungsabschaltung (OV) beinhaltet. Die Überspannungsabschaltung OV erfasst die Zwischenkreisspannung. Überschreitet die Zwischenkreisspannung einen vorgegebenen Überspannungsschwelle, wird die Oszillation der Leistungsfaktor-KorrekturEinrichtung angehalten. Dadurch wird, unter anderem, der Zwischenkreiskondensator gegen Überspannungen geschützt.

## Aufgabe

Es ist Aufgabe der Erfindung, ein Verfahren zur Regelung eines Spannungswandlers zum Betreiben einer schaltbaren Last, mit mindestens einer Induktivität und einem Schalter, der mittels einer digitalen Steuerungseinrichtung angesteuert wird, anzugeben, bei dem die Erkennung einer zu hohen Eingangsspannung besser arbeitet. Es ist ebenfalls Aufgabe der Erfindung, einen Spannungswandler und ein Betriebsgerät mit solch einem Spannungswandler anzugeben, die das oben genannte Verfahren ausführen.

## Darstellung der Erfindung

Die Lösung der Aufgabe bezüglich des Verfahrens erfolgt erfindungsgemäß mit einem Verfahren zur Regelung eines Spannungswandlers zum Betreiben einer schaltbaren Last, mit mindestens einer Induktivität und einem Schalter, der mittels einer digitalen Steuerungseinrichtung angesteuert wird, wobei bei geschlossenem Schalter ein Aufmagnetisierungsstrom durch die Induktivität fließt, und bei offenem Schalter ein Abmagnetisierungsstrom durch die Induktivität fließt, und die Abmagnetisierungszeit der Induktivität gemessen wird, und das Überschreiten eines Maximalwertes der Abmagnetisierungszeit der Induktivität als Fehlerfall gespeichert wird, wobei bei Überschreiten einer vorbestimmten Maximalhäufigkeit der Fehlerfälle die Last von der Steuerungseinrichtung abgeschaltet wird. Durch diese Maßnahme ist eine frühe Erkennung einer erhöhten Eingangsspannung möglich, bei der die Last zum Schutze des Spannungswandlers abgeschaltet wird. Bei sinnvoller Parametrierung der Fehlerhäufigkeit wird ein Abschalten der Last bei immer wiederkehrenden, jeweils nur kurzen Spannungsüberhöhungen, die für den Spannungswandler nicht schädlich sind, vermieden. Die Fehlerfälle können dabei gleich gewichtet, oder in Abhängigkeit von der Abmagnetisierungszeit gewichtet werden. Die Abmagnetisierungszeit wird dabei bevorzugt durch die Ausschaltzeit des Schalters im Betrieb an der Lückgrenze gemessen. Dadurch ist bei digitalen Steuerungen eine einfache und praktisch kostenlose Messmöglichkeit gegeben, da die Ausschaltzeit des Schalters im Betrieb an der Lückgrenze der digitalen Steuerung prinzipbedingt bekannt ist.

Dabei kann bei Unterschreiten einer vorbestimmten Spannungsgrenze der Ausgangsspannung des nicht arbeitenden Spannungswandlers die Last auch wieder angeschaltet werden. Dadurch ist ein reversibler Fehlerfall gegeben, bei dem nach Wegfall des Fehlers die gesamte Anordnung wieder in den Normalbetrieb übergeht. Die Nutzungsdauer kann dadurch erhöht werden, und der Bedienkomfort steigt.

Die schaltbare Last weist bevorzugt einen Wechselrichter und eine Gasentladungslampe auf, wobei die schaltbare Last dadurch abgeschaltet wird, indem der Betrieb des Wechselrichters eingestellt wird. Damit entspricht die gesamte Anordnung einem elektronischen Betriebsgerät für Gasentladungslampen, das einen gegenüber dem Stand der Technik verbesserten Überspannungsschutz aufweist.

Die Lösung der Aufgabe bezüglich des Betriebsgerätes erfolgt mit einem elektronischen Betriebsgerät aufweisend einem elektronischen Wandler zum Betreiben einer schaltbaren Last, mit mindestens einer Induktivität und einem Schalter, der mittels einer digitalen Steuerungseinrichtung angesteuert wird, wobei bei geschlossenem Schalter ein Aufmagnetisierungsstrom durch die Induktivität fließt, und bei offenem Schalter ein Abmagnetisierungsstrom durch die Induktivität fließt, und der Wandler dabei das vorgenannte Verfahren ausführt.

Die Lösung der Aufgabe bezüglich des Wandlers erfolgt mit einem elektronischen Wandler zum Betreiben einer schaltbaren Last, mit mindestens einer Induktivität und einem Schalter, der mittels einer digitalen Steuerungseinrichtung angesteuert wird, wobei bei geschlossenem Schalter ein Strom fließt, der die Induktivität aufmagnetisiert, und bei offenem Schalter ein Strom fließt, der die Induktivität abmagnetisiert, dadurch gekennzeichnet, dass der elektronische Wandler das oben genannte Verfahren ausführt.

Der Wandler ist bevorzugt als Leistungsfaktorkorrekturschaltung ausgebildet. Das elektronische Betriebsgerät weist bevorzugt eine Gasentladungslampe als schaltbare Last auf, wobei zwischen dem Wandler des elektronischen Betriebsgerätes und der Gasentladungslampe ein Wechselrichter angeordnet ist, der von der Steuerungseinrichtung angesteuert wird und hierbei die Schaltfunktion übernimmt. Wird die Gasentladungslampe gestartet, so wird das Verfahren vorzugsweise nicht ausgeführt.

Weitere vorteilhafte Weiterbildungen und Ausgestaltungen des erfindungsgemäßen Verfahrens zur Regelung eines Spannungswandlers ergeben sich aus weiteren abhängigen Ansprüchen und aus der folgenden Beschreibung.

## Kurze Beschreibung der Zeichnung(en)

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Dabei zeigen:

Fig. 1 die schematische Darstellung eines Spannungswandlers, der eine schaltbare Last mit Energie versorgt und der das erfindungsgemäße Verfahren ausführt,

Fig. 2 die schematische Darstellung des Spannungswandlers als Teil eines elektronischen Betriebsgerätes zum Betreiben von Gasentladungslampen,

Fig. 3 den Drosselstrom und die Schalterspannung des Spannungswandlers, der das erfindungsgemäße Verfahren ausführt,

Fig. 4a die Eingangsspannung und die Ausgangsspannung des Spannungswandlers, der das erfindungsgemäße Verfahren ausführt,

Fig. 4b die Variation der Ausschaltzeit des Schalters über der Zeit im Betrieb an der Lückgrenze,

Fig. 4c die Darstellung der Ausschaltfunktion über der Zeit in einer ersten Ausführungsform.

## Bevorzugte Ausführung der Erfindung

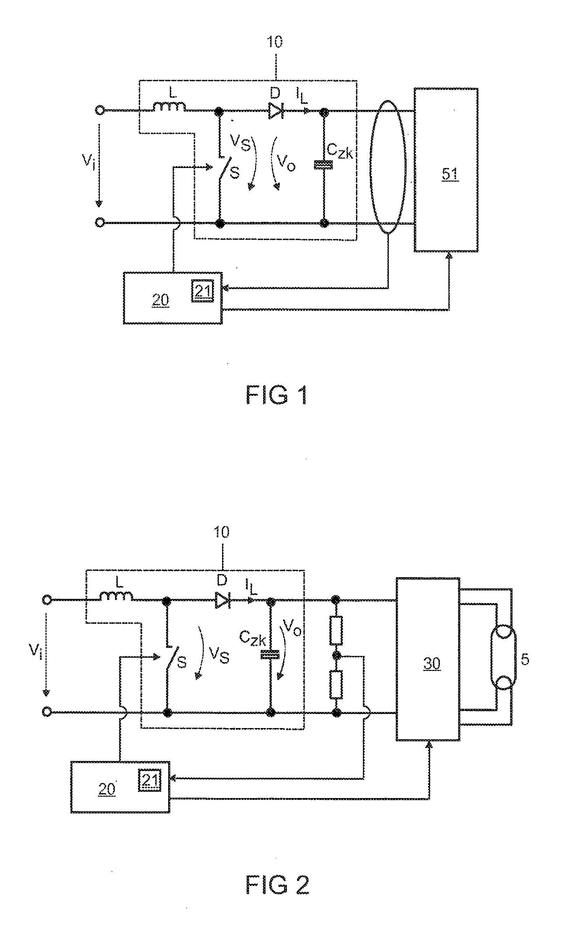

**Fig. 1** zeigt die schematische Darstellung eines Spannungswandlers 10, der eine schaltbare Last mit Energie versorgt und der das erfindungsgemäße Verfahren ausführt. Der Spannungswandler 10 weist die Topologie einer an sich bekannten Leistungsfaktorkorrekturschaltung auf. Parallel zur Eingangsspannung $V_i$ ist die Serienschaltung einer Induktivität L und eines Schalters S geschaltet. Parallel zum Schalter S ist die Serienschaltung einer Diode D und eines Zwischenkreiskondensators $C_{ZK}$ geschaltet. Die Ausgangsspannung Vo liegt am Zwischenkreiskondensator $C_{ZK}$ an. Der Schalter S und eine schaltbare Last 51 werden von einer Steuerungseinrichtung 20 gemäß dem erfindungsgemäßen Verfahren angesteuert. Die Steuerungseinrichtung 20 bekommt als Eingangsgröße die Ausgangsspannung $V_o$ des Spannungswandlers 10, die gleichzeitig die Zwischenkreisspannung darstellt. Die Steuerungseinrichtung 20 weist einen Speicher 21 auf, in dem gemäß dem erfindungsgemäßen Verfahren basierend auf einer Entmagnetisierungszeit der Induktivität L ein Fehlerfall gespeichert wird. Dabei wird nicht nur die Anzahl der Fehlerfälle in dem Speicher-21 gespeichert, sondern auch deren zeitliches Auftreten, damit im erfindungsgemäßen Verfahren später eine Häufigkeit des Auftretens der Fehlerfälle berechnet werden kann.

**Fig. 2** zeigt die schematische Darstellung des Spannungswandlers als Teil eines elektronischen Betriebsgerätes zum Betreiben von Gasentladungslampen. Es wird wieder die oben schon beschriebene Leistungsfaktorkorrekturschaltung 10 als Spannungswandler verwendet. Die Steuerungseinrichtung 20 bezieht das Ausgangsspannungssignal der Leistungsfaktorkorrekturschaltung 10 über einen Spannungsteiler. Als schaltbare Last 51 ist hier ein Wechselrichter 30 vorgesehen, der eine Gasentladungslampe 5 betreibt. Stilisiert ist hier eine Niederdruck-Gasentladungslampe angedeutet, es kann aber genauso gut eine Hochdruckentladungslampe oder ein Modul aus einer oder mehreren Halbleiterlichtquellen mit dem erfindungsgemäßen Verfahren betrieben werden. Der Wechselrichter ist in der üblichen Weise aufgebaut, d.h. es kann z.B. ein Halbbrückenwechselrichter oder ein Vollbrückenwechselrichter verwendet werden. Ebenso ist es aber auch denkbar, einen Eintaktwandler, wie z.B. einen Class-E Wandler zu verwenden.

Wie aus den **Fig. 1 und 2** entnommen werden kann, weist die Leistungsfaktorkorrekturschaltung keine Eingangsspannungsmessung auf. Diese wird aus verschiedenen Gründen nur ungern implementiert. Einerseits ist die Messung einer weiteren Messgröße mit Aufwand und damit mit Kosten verbunden. Andererseits gibt es in vielen Ländern strikte Normen für Schaltungsteile, die mit der Netzspannung verbunden sind, was den Aufwand und die Kosten für eine Messung dieser Spannung weiter erhöht. Die Leistungsfaktorkorrekturschaltung kann also die Größe der Eingangsspannung nicht direkt messen, sondern nur indirekt ermitteln. Das bisher verwendete Eingangs erwähnte Verfahren ist wie oben schon beschrieben zu ungenau, um die schaltbare Last bei einer niedrigen maximalen Eingangsspannung abschalten zu können. Erfindungsgemäß wird nun die Abmagnetisierungszeit der Induktivität L, die der Ausschaltzeit des Schalters S im Betrieb an der Lückgrenze entspricht, zur Erkennung der Eingangsspannungsgröße herangezogen. Die Abmagnetisierungszeit ist die Zeit, in der der durch die Induktivität L fließende Strom von einem maximalen Wert innerhalb eines Zyklus auf Null sinkt. Die Induktivität L wird im Folgenden auch als Drossel L bezeichnet. Die über die Rückkopplung ausgeregelte Ausschaltzeit des Schalters S, die im Betrieb an der Lückgrenze gleich der Abmagnetisierungszeit ist, ist bei einem Hochsetzsteller ein Maß für die Differenz zwischen der momentanen Eingangsspannung und der Ausgangsspannung.

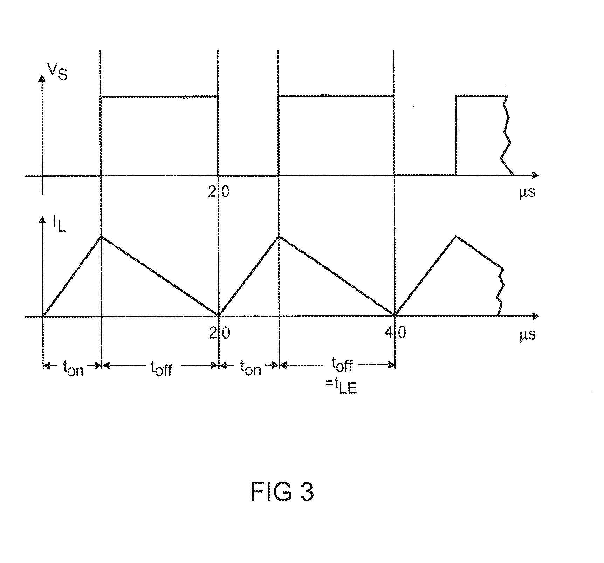

Dieser Zusammenhang wird nun anhand von **Fig. 3** beschrieben. Die obere Kurve in Fig. 3 zeigt die Spannung $V_s$ über dem Schalter S, die untere zeigt den Wandlerstrom $I_L$, der durch die Diode D und durch die Drossel L fließt. Der dreieckige Stromverlauf ist typisch für Drosselwandler, bei denen die Energie durch das Laden und Entladen einer Drossel transferiert wird. Im lückenden Betrieb beziehungsweise im Betrieb an der Lückgrenze geht der Strom durch die Drossel L immer auf null herunter. Wie anhand beider Kurven zu sehen ist, ist der Schalter S eingeschaltet, wenn der Strom steigt, und die Drossel aufgeladen wird. Während dieser Zeit ist die Spannung über dem Schalter S null. Während der Ausschaltphase liegt eine Spannung über dem Schalter an, die der Eingangsspannung nach der Drossel L entspricht. In dieser Zeit sinkt der Strom durch die Drossel L wieder, bis er nach etwa 20 µs gegen Null geht. Die Einschaltzeit des Transistors ist hier näherungsweise immer gleich lang. Damit folgt der Scheitelwert des Drosselstromes der Eingangsspannung und der Wandler übernimmt die Charakteristik einer Leistungsfaktorkorrekturschaltung. Die Einschaltdauer wird von der Regelung vorgegeben. Sie ist konstant über die Netzmodulation und richtet sich nach der Systemleistung. Die Entladedauer der Drossel, die im Betrieb an der Lückgrenze gleichzusetzen ist mit der Ausschaltdauer des Schalters S, variiert jedoch abhängig vom Quotienten aus Eingangsspannung und der Differenz aus der Ausgangsspannung und der Eingangsspannung. Mathematisch kann damit folgende Gleichung formuliert werden:

$$t_{off} = t_{on} \cdot \frac{V_i}{V_o - V_i} \; ;$$ $t_{on}$ wird dabei, wie oben beschrieben, näherungsweise als konstant angesehen.

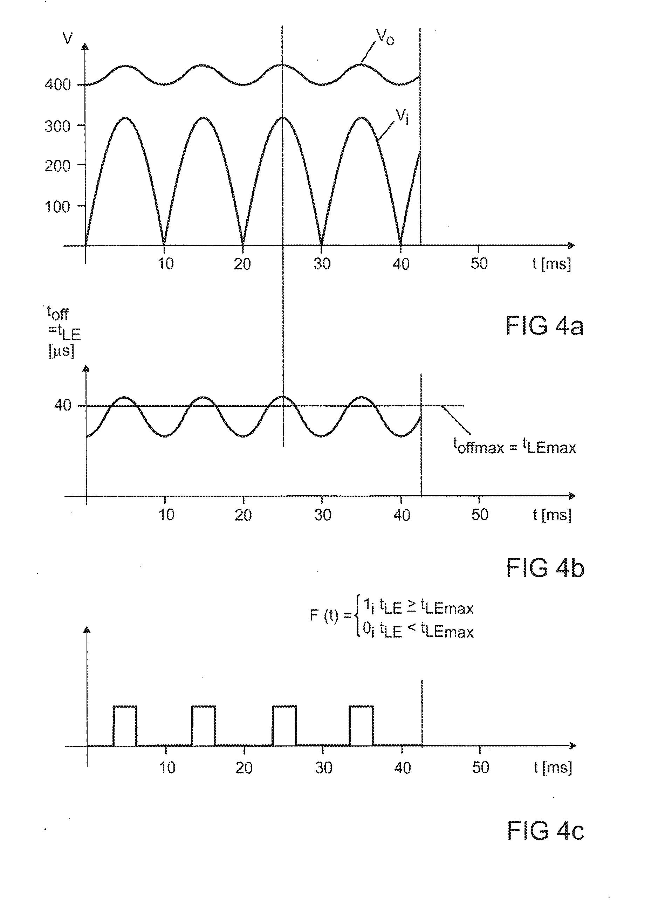

**Fig. 4** zeigt nun einige Graphen, anhand derer das erfindungsgemäße Verfahren verdeutlicht werden soll. **Fig. 4a** zeigt die Eingangsspannung $V_i$ und die Ausgangsspannung $V_o$ des Spannungswandlers, der das erfindungsgemäße Verfahren ausführt. Die Eingangsspannung $V_i$ weist den typischen gleichgerichteten 100Hz-Sinus auf, wie er in europäischen Netzen vorkommt. Die Ausgangsspannung $V_o$ ist insgesamt höher als die Eingangsspannung $V_i$, da es sich bei der Leistungsfaktorkorrekturschaltung ja um einen Hochsetzsteller handelt, dessen Ausgangsspannung $V_o$ immer größer ist als die Eingangsspannung $V_i$. Der Mittelwert der Ausgangsspannung $V_o$ liegt hier z.B. bei 420V. Ist die Eingangsspannung $V_i$ zu groß, liegt also der Scheitelwert der Eingangsspannung $V_i$ über 320V, so steigt auch die Ausschaltzeit $t_{off}$ des Schalters S im Netzspannungsscheitel entsprechend an. **Fig. 4b** zeigt die Variation der Ausschaltzeit $t_{off}$ des Schalters über der Zeit im Betrieb an der Lückgrenze des Spannungswandlers 10. Durch die gleiche Zeitauflösung der untereinander liegenden Graphen ist gut zu sehen, dass die Ausschaltzeit $t_{off}$ immer dann ihr Maximum erreicht, wenn auch die Dif-

ferenz zwischen Eingangsspannung $V_i$ und Ausgangsspannung $V_o$ am höchsten ist, also immer in der Nähe des Netzscheitels. Ist die Netzspannung zu hoch, so erreicht auch die Ausschaltzeit $t_{off}$ Werte, die über denen im Normalen Betrieb liegen. Da die Ausschaltzeit $t_{off}$ der Steuerungseinrichtung 20 bekannt ist, kann sie diese auf eine Überschreitung eines vorbestimmten Maximalwertes hin überwachen und bei Überschreitung erfindungsgemäß einen Fehlerfall im Speicher 21 abspeichern. Der Speicher 21 ist dabei vorzugsweise Bestandteil der Steuerungseinrichtung 20. Genauso gut kann selbstverständlich auch direkt die Entladedauer, d.h. die Abmagnetisierungszeit $t_{LE}$ der Drossel gemessen werden, die im Falle des Betriebs an der Lückgrenze der Ausschaltzeit $t_{off}$ des Schalters S entspricht. Ist der Wandler keine Leistungsfaktorkorrekturschaltung und wird im lückenden Betrieb gefahren, so kann die Ausschaltzeit des Schalters S nicht mehr herangezogen werden, sondern es muss direkt die Entladedauer, d.h. die Abmagnetisierungszeit $t_{LE}$ der Drossel L gemessen werden. Es kann parallel zum Fehlerfall auch ein Zeitstempel abgespeichert werden. Der Zeitstempel gibt Auskunft darüber, wann der Fehlerfall genau aufgetreten ist.

Der vorbestimmte Maximalwert der Ausschaltzeit $t_{offMax}$, der dem vorbestimmten Maximalwert der Abmagnetisierungszeit $t_{LEmax}$ entspricht, ist in **Fig. 4b** durch eine waagerechte Linie angedeutet, und beträgt im vorliegenden Ausführungsbeispiel $40\,\mu s$. Sobald also im Betrieb an der Lückgrenze die Ausschaltzeit $t_{off}=t_{LE}$ größer als $40\,\mu s$ ist, wird ein Fehlerfall abgespeichert. Dazu wird der einfacheren Verarbeitung halber eine Funktion verwendet, die diesen Sachverhalt mathematisch abbildet. Diese wird im Folgenden als Ausschaltfunktion F(t) bezeichnet. Im einfachsten Fall ist diese 1, wenn der vorbestimmte Maximalwert $t_{LEmax}$ (=$t_{offmax}$ im Betrieb an der Lückgrenze) überschritten ist, und somit ein Fehlerfall vorliegt und 0, wenn dies nicht der Fall ist:

$$F(t) = \begin{cases} 1; t_{LE} > t_{LE\max} \\ 0; t_{LE} \leq t_{LE\max} \end{cases} .$$ Diese Funktion ist in **Fig. 4c** über der Zeit dargestellt. Aus dieser Funktion heraus können nun verschiedene Algorithmen entwickelt werden, um mit den gespeicherten Fehlerfällen umzugehen. Im einfachsten Fall einer ersten Ausführungsform wird die Fehlerhäufigkeit innerhalb einer bestimmten Zeitspanne gemessen. Ist die Fehlerhäufigkeit größer als ein vorbestimmter Wert, so schaltet die Steuerungseinrichtung 20 den Wechselrichter 30 und damit die Gasentladungslampe 5 ab. Als Fehlerhäufigkeit wird im Folgenden die Häufigkeit der Fehlerfälle durch eine kumulierte Anzahl der Fehlerfälle innerhalb einer vorbestimmten Zeitspanne definiert.

Ist die Eingangsspannung zu hoch, so steigt die Fehlerhäufigkeit so lange, bis entweder das Gerät abschaltet, oder bei nur kurzzeitiger Erhöhung die Fehlerhäufigkeit langsam wieder sinkt. Somit merkt sich das elektronische Betriebsgerät die kurzfristige Erhöhung der Eingangsspannung $V_i$ nicht dauerhaft, und geht schnell wieder in den Normalbetrieb über. Je nachdem wie lange die Zeitspanne ist, innerhalb derer die Fehlerhäufigkeit gemessen wird, kann eine eher intolerante Abschaltmimik oder ein eher tolerantes Verhalten erreicht werden. Je kürzer die betrachtete Zeitspanne, umso intoleranter ist das Abschaltverhalten. Je größer die betrachtete Zeitspanne, umso milder wird die Schwelle ausgelegt, bei der der Wechselrichter 30 abgeschaltet wird. Lediglich bei einer andauernden anliegenden Überspannung schaltet das Gerät ab. In dieser Variante kann die Steuereinrichtung 20 nach dem Abschalten natürlich weiterlaufen und die Ausgangsspannung des Gleichspannungswandlers überwachen, um das Gerät bei Bedarf wieder Einschalten zu können. Dies kann jedoch nicht mehr anhand der Abmagnetisierungszeit $t_{LE}$ der Drossel L beurteilt werden. Bei abgeschalteter Last schaltet die Steuerungseinrichtung 20 den Gleichspannungswandler ab, so dass er nicht mehr arbeitet. Dann ist aufgrund des festen Strompfades die Ausgangsspannung $V_o$ des Wandlers im Wesentlichen gleich dem Scheitelwert der Eingangsspannung $V_i$ (Spitzenwert-Gleichrichtung bei fehlendem Laststrom) Daher kann die Eingangsspannung $V_i$ in diesem Fall mehr oder minder direkt über die Ausgangsspannung $V_o$ gemessen werden. Unterschreitet die Eingangsspannung $V_i$ wieder einen vorbestimmten unteren Eingangsspannungswert, so kann die Steuerungseinrichtung 20 die Last wieder einschalten, also den Wechselrichter 30 und damit die Gasentladungslampe 5 wieder in Betrieb nehmen.

In einer weiteren Ausführungsform des erfindungsgemäßen Verfahrens kann die Ausschaltfunktion F(t) auch zwei oder mehr Werte aufweisen, die durch zwei oder mehr Schwellen der Abmagnetisierungszeit $T_{LE}$ (entsprechend der Ausschaltzeit $t_{off}$ des Schalters S im Betrieb an der Lückgrenze) generiert werden:

$$F(t) = \begin{cases} 2; t_{LE} > t_{LE2\max} \\ 1; t_{LE} > t_{LE1\max} \\ 0; t_{LE} \leq t_{LE1\max} \end{cases} .$$ Hierbei gibt es zwei Schwellen, $t_{LE1max}$ und $t_{LE2max}$, wobei $t_{LE2max}$ größer ist als $t_{LE1max}$. Hierbei kann eine feinere Einstellung der Abschaltung erreicht werden, da der Speicher 21 bei höheren Eingangsspannungen auch 'schwere Fehlerfälle' abspeichern kann, und bei nur leicht erhöhten Eingangsspannungen entsprechend 'leichtere Fehlerfälle'. $t_{LE1max}$ kann hier z.B. bei $40\,\mu s$ liegen, und $t_{LE2max}$ bei $45\,\mu s$. Damit werden die einzelnen aufkumulierten Fehlerfälle gewichtet, und die Abschaltung kann noch feiner justiert werden.

Die Fehlerfälle können auch in einen Speicher geschrieben werden, wobei der Speicher 21 während der betrachteten Zeitspanne bei einem leichten Fehlerfall um eins erhöht wird, und während eines schweren Fehlerfalls um zwei erhöht wird. Überschreitet der Speicherinhalt des Speichers 21 in dieser Zeitspanne einen vorbestimmten Wert, so wird der Wechselrichter 30 abgeschaltet. Nach Ablauf dieser Zeitspanne wird der Speicher auf 0 zurückgesetzt, und die Messung kann von neuem beginnen.

Es kann jedoch auch ein sogenannter 'FILO'-Speicher implementiert werden, mittels dem dann eine gleitende Messspanne realisiert werden kann. FILO steht für first in, last out. Damit werden nur die Fehlerfälle betrachtet, deren Zeitstempel innerhalb der betrachteten Zeitspanne liegen. Jedem Fehler wird die Zeit des Auftretens des Fehlers zugeordnet. Liegt der Zeitpunkt des Auftretens des Fehlers innerhalb der Zeitspanne, so wird der Fehler im Fehlerspeicher gezählt, liegt er außerhalb dieser Zeitspanne, so wird er aus dem Speicher 21 gelöscht, d.h. der Speicher 21 wird wiederum um diesen Wert erniedrigt. Somit ist eine zeitkontinuierliche Bewertung der Eingangsspannung möglich, die die Betriebssicherheit steigert. Die Zeitspanne gleitet immer mit der aktuellen Zeit mit, es wird also z.B. eine Zeitspanne betrachtet, die zum aktuellen Zeitpunkt aufhört, und die zu einem Zeitpunkt beginnt, der um einen vorbestimmten Wert vor der aktuellen Zeit liegt. Die Zeitspanne wird also berechnet zu: Aktueller Zeitpunkt- vorbestimmte Zeitspanne. Diese Zeitspanne läuft damit immer mit der aktuellen Zeit mit, so dass eine gleitende Bewertung ermöglicht wird.

Natürlich sind die Werte der Ausschaltfunktion F(t) nicht auf 0, 1 und 2 begrenzt. Je nach Auslegung und Speicher können die Werte der Anwendung angepasst werden. Dabei sind sowohl negative Zahlen denkbar (z.B. 1; 0; -1) sowie ebenfalls asymmetrische Varianten (z.B. 32, 8, -4), mittels denen der Speicher gefüttert werden kann.

Bei der Verwendung von negativen Zahlen wird der Fehlerspeicher im Normalfall erniedrigt, bis er im Normalbetrieb den Wert 0 erreicht. Dies bedeutet, dass kein Fehlerfall vorliegt, da der Speicher 21 nicht kleiner als Null werden kann. Im Fehlerfall wird der Speicher 21 jedoch um einen größeren Wert erhöht, so dass der Inhalt des Speichers ab einer gewissen Fehlerhäufigkeit steigt. Eine bevorzugte vorbestimmte Maximalhäufigkeit der Fehlerfälle ist hier z.B. 10%, d.h. wenn im betrachteten Zeitraum mehr als 10% der gemessenen Abmagnetisierungszeiten $t_{LE}$ über dem vorbestimmten Maximalwert der Abmagnetisierungszeit $t_{LEmax}$ liegen, wird der Wechselrichter und damit die Gasentladungslampe 5 als Last abgeschaltet. Dies bedeutet, dass im einfachen Fall einer einzigen Fehlerschwelle (d.h. lediglich ein vorbestimmter Maximalwert der Abmagnetisierungszeit $t_{LEmax}$) die Ausschaltfunktion definiert ist zu:

$$F(t) = \begin{cases} 10; t_{LE} > t_{LE\,max} \\ -1; t_{LE} \leq t_{LE\,max} \end{cases} ; \text{ Damit steigt ab einer}$$

Fehlerhäufigkeit von >10% der gespeicherte Wert des Speichers 21 an und ab einem vorbestimmten Wert des Fehlerspeichers kann die Gasentladungslampe 5 mittels des Wechselrichters 30 abgeschaltet werden. Über die Größe des vorbestimmten Wertes des Fehlerspeichers kann die Toleranzschwelle der Anordnung noch feinjustiert werden.

Natürlich kann die Ausschaltfunktion auch noch mehr Schwellen und damit mehr mögliche Werte aufweisen, wenn dies aufgrund der Anwendung sinnvoll und somit angezeigt ist. Durch die Kombination einer von der Eingangsspannung abhängigen Veränderung des Speichers 21 und der von der Zeitspanne abhängigen Verweildauer der Speicherinhalte ist eine hohe Betriebssicherheit gewährleistet. Dadurch kann das erfindungsgemäße Verfahren an verschiedenste Randbedingungen angepasst werden, und so die gewünschte Verhaltensweise dargestellt werden.

## Bezugszeichenliste

| | |
|---|---|
| 5 | Gasentladungslampe |
| 10 | Spannungswandler |
| 20 | Steuerungseinrichtung |
| 21 | Speicher |
| 30 | Wechselrichter |
| 51 | schaltbare Last |
| $V_S$ | Spannung über dem Schalter |
| $V_i$ | Eingangsspannung des Spannungswandlers |
| $V_o$ | Ausgangsspannung des Spannungswandlers |
| $I_L$ | Wandlerstrom |
| $t_{on}$ | Einschaltdauer des Schalters S |
| $t_{off}$ | Ausschaltdauer des Schalters S |
| $t_{LE}$ | Abmagnetisierungszeit der Drossel L |
| $t_{LEmax}$ | Grenzwert der Abmagnetisierungszeit der Drossel L |
| $t_{offmax}$ | Grenzwert der Ausschaltdauer des Schalters S im Betrieb an der Lückgrenze |
| F(t) | interpretierte Schaltfunktion, abhängig von der Abmagnetisierungszeit $t_{LE}$ der Drossel L |

## Patentansprüche

1. Verfahren zur Regelung eines Spannungswandlers (10) zum Betreiben einer schaltbaren Last (51), mit

    - mindestens einer Induktivität (L) und
    - einem Schalter (S), der mittels einer digitalen Steuerungseinrichtung (20) angesteuert wird, wobei
    - bei geschlossenem Schalter ein Aufmagnetisierungsstrom durch die Induktivität fließt, und
    - bei offenem Schalter ein Abmagnetisierungsstrom durch die Induktivität fließt,

    **dadurch gekennzeichnet, dass**

    - die Abmagnetisierungszeit ($t_{LE}$) der Induktivität (L) gemessen wird, und
- das Überschreiten eines Maximalwertes ($t_{LEmax}$) der Abmagnetisierungszeit ($t_{LE}$) der Induktivität (L) als Fehlerfall gespeichert wird, wobei
- bei Überschreiten einer vorbestimmten Maximalhäufigkeit der Fehlerfälle die Last (51) durch die Steuerungseinrichtung (20) abgeschaltet wird.

2. Verfahren nach Anspruch 1, **dadurch gekennzeichnet, dass** die Häufigkeit der Fehlerfälle durch eine kumulierte Anzahl der Fehlerfälle innerhalb einer vorbestimmten Zeitspanne definiert wird.

3. Verfahren nach Anspruch 2, **dadurch gekennzeichnet, dass** die einzelnen Fehlerfälle jeweils gleich gewichtet werden.

4. Verfahren nach Anspruch 2, **dadurch gekennzeichnet, dass** die einzelnen Fehlerfälle in Abhängigkeit von der Abmagnetisierungszeit ($t_{LE}$) der Induktivität (L) gewichtet werden.

5. Verfahren nach einem der Ansprüche 2-4, **dadurch gekennzeichnet, dass** die vorbestimmte Zeitspanne gleitend mit der aktuellen Zeit ist.

6. Verfahren nach einem der vorhergehenden Ansprüche, **dadurch gekennzeichnet, dass** die Abmagnetisierungszeit ($t_{LE}$) durch die Bestimmung der Ausschaltzeit ($t_{off}$) des Schalters (S) im Betrieb an der Lückgrenze gemessen wird.

7. Verfahren nach einem der vorhergehenden Ansprüche, **dadurch gekennzeichnet, dass** bei Unterschreiten einer vorbestimmten Wandlerausgangsspannung ($V_o$) die Last (51) wieder angeschaltet wird.

8. Verfahren nach einem der vorhergehenden Ansprüche, **dadurch gekennzeichnet, dass** die schaltbare Last (51) einen von der Steuerungseinrichtung (20) angesteuerten Wechselrichter (30) und eine Gasentladungslampe (5) aufweist, wobei die schaltbare Last (51) dadurch abgeschaltet wird, indem der Betrieb des Wechselrichters (30) eingestellt wird.

9. Elektronischer Wandler (10) zum Betreiben einer schaltbaren Last (51), mit

- mindestens einer Induktivität (L) und
- einem Schalter (S), der mittels einer digitalen Steuerungseinrichtung (20) angesteuert wird, wobei
- bei geschlossenem Schalter ein Strom fließt, der die Induktivität aufmagnetisiert, und
- bei offenem Schalter ein Strom fließt, der die Induktivität abmagnetisiert, **dadurch gekennzeichnet, dass** der elektronische Wandler (10) ausgelegt ist ein Verfahren nach einem der Ansprüche 1-8 auszuführen.

10. Elektronischer Wandler (10) nach Anspruch 9, **dadurch gekennzeichnet, dass** der Wandler (10) als Leistungsfaktorkorrekturschaltung ausgebildet ist.

11. Elektronisches Betriebsgerät zum Betreiben einer Gasentladungslampe (5), **dadurch gekennzeichnet, dass** es einen elektronischen Wandler (10) nach Anspruch 9 oder 10 aufweist, wobei die Last die Gasentladungslampe (5) ist.

12. Elektronisches Betriebsgerät nach Anspruch 11, **dadurch gekennzeichnet, dass** es weiterhin einen Wechselrichter (30) aufweist, der ausgebildet ist, die Gasentladungslampe (5) ein- und auszuschalten.

13. Elektronisches Betriebsgerät nach einem der Ansprüche 11 oder 12, **dadurch gekennzeichnet, dass** es ausgelegt ist das Verfahren gemäß einem der Ansprüche 1-8 während des Starts der Gasentladungslampe (5) nicht auszuführen.

**Claims**

1. Method for controlling a voltage transformer (10) for operating a switchable load (51), with

- at least one inductance (L) and
- a switch (S), which is activated by means of a digital control device (20), wherein
- when the switch is closed, a magnetizing current flows through the inductance, and
- when the switch is open, a demagnetizing current flows through the inductance,

**characterized in that**

- the demagnetizing time (tLE) of the inductance (L) is measured, and
- the exceeding of a maximum value (tLEmax) of the demagnetizing time (tLE) of the inductance (L) is stored as a fault, wherein
- the load (51) is disconnected by the control device (20) when a predetermined maximum frequency of faults is exceeded.

2. Method according to Claim 1, **characterized in that** the frequency of the faults is defined by a cumulative number of faults within a predetermined time period.

3. Method according to Claim 2, **characterized in that** the individual faults are each weighted equally.

**4.** Method according to Claim 2, **characterized in that** the individual faults are weighted according to the demagnetizing time ($t_{LE}$) of the inductance (L).

**5.** Method according to one of Claims 2-4, **characterized in that** the predetermined time period is sliding with the current time.

**6.** Method according to one of the preceding claims, **characterized in that** the demagnetizing time ($t_{LE}$) is measured by determining the switch-off time ($t_{off}$) of the switch (S) when operating at the ripple limit.

**7.** Method according to one of the preceding claims, **characterized in that,** when the output voltage goes below a predetermined transformer output voltage ($V_o$), the load (51) can be reconnected.

**8.** Method according to one of the preceding claims, **characterized in that** the switchable load (51) has an inverter (30), which is activated by the control device (20), and a gas discharge lamp (5), wherein the switchable load (51) is disconnected by the operation of the inverter (30) being suspended.

**9.** Electronic transformer (10) for operating a switchable load (51), with

- at least one inductance (L) and
- a switch (S), which is activated by means of a digital control device (20), wherein
- when the switch is closed, a current which magnetizes the inductance flows, and
- when the switch is open, a current which demagnetizes the inductance flows, **characterized in that** the electronic transformer (10) is designed to perform a method according to one of Claims 1-8.

**10.** Electronic transformer (10) according to Claim 9, **characterized in that** the transformer (10) is designed as a power factor correction circuit.

**11.** Electronic operating device for operating a gas discharge lamp (11), **characterized in that** it has an electronic transformer (10) according to Claim 9 or 10, wherein the load is the gas discharge lamp (5).

**12.** Electronic operating device according to Claim 11, **characterized in that** it also has an inverter (30), which is designed for switching the gas discharge lamp (5) on and off.

**13.** Electronic operating device according to either of Claims 11 and 12, **characterized in that** it is designed not to perform the method according to one of Claims 1-8 during the starting of the gas discharge lamp (5).

**Revendications**

**1.** Procédé de régulation d'un transformateur de tension (10) qui est destiné à faire fonctionner une charge commutable (51) et qui comprend

- au moins une inductance (L) et
- un commutateur (S) commandé au moyen d'un dispositif de commande numérique (20), sachant que
- lorsque le commutateur est fermé, un courant de remagnétisation circule à travers l'inductance, et
- lorsque le commutateur est ouvert, un courant de démagnétisation circule à travers l'inductance,

**caractérisé en ce que**

- le temps de démagnétisation ($t_{LE}$) de l'inductance (L) est mesuré et
- le dépassement d'une valeur maximale ($t_{LEmax}$) du temps de démagnétisation ($t_{LE}$) de l'inductance (L) est enregistré comme situation d'erreur, et
- en cas de dépassement d'une fréquence maximale prédéterminée des situations d'erreur, la charge (51) est déconnectée par le dispositif de commande (20).

**2.** Procédé selon la revendication 1, **caractérisé en ce que** la fréquence des situations d'erreur est définie par un nombre cumulé des situations d'erreur dans un intervalle de temps prédéterminé.

**3.** Procédé selon la revendication 2, **caractérisé en ce que** les différentes situations d'erreur sont pondérées pareillement.

**4.** Procédé selon la revendication 2, **caractérisé en ce que** les différentes situations d'erreur sont pondérées en fonction du temps de démagnétisation ($t_{LE}$) de l'inductance (L).

**5.** Procédé selon l'une des revendications 2-4, **caractérisé en ce que** l'intervalle de temps prédéterminé est mobile avec l'heure actuelle.

**6.** Procédé selon l'une des revendications précédentes, **caractérisé en ce que** le temps de démagnétisation ($t_{LE}$) est mesuré en déterminant le temps de déconnexion ($t_{off}$) du commutateur (S) en fonctionnement à la limite de la discontinuité.

**7.** Procédé selon l'une des revendications précédentes, **caractérisé en ce que** si la tension de sortie du transformateur tombe en dessous d'une tension prédéterminée ($V_o$), la charge (51) est reconnectée.

**8.** Procédé selon l'une des revendications précédentes, **caractérisé en ce que** la charge commutable (51) comprend un onduleur (30) commandé par le dispositif de commande (20), et une lampe à décharge (5), la charge commutable (51) étant déconnectée en suspendant le fonctionnement de l'onduleur (30).

**9.** Transformateur électronique (10) qui est destiné à faire fonctionner une charge commutable (51) et qui comprend

- au moins une inductance (L) et
- un commutateur (S) commandé au moyen d'un dispositif de commande numérique (20), sachant que
- lorsque le commutateur est fermé, un courant, qui remagnétise l'inductance, circule, et
- lorsque le commutateur est ouvert, un courant, qui démagnétise l'inductance, circule,

**caractérisé en ce que** le transformateur électronique (10) est conçu pour mettre en oeuvre un procédé selon l'une des revendications 1-8.

**10.** Transformateur électronique (10) selon la revendication 9, **caractérisé en ce que** le transformateur (10) est réalisé sous forme de circuit de correction du facteur de puissance.

**11.** Equipement électronique pour faire fonctionner une lampe à décharge (5), **caractérisé en ce qu'**il comprend un transformateur électronique (10) selon la revendication 9 ou 10, la charge étant la lampe à décharge (5).

**12.** Equipement électronique selon la revendication 11, **caractérisé en ce qu'**il comprend en outre un onduleur (30), conçu pour connecter et déconnecter la lampe à décharge (5).

**13.** Equipement électronique selon l'une des revendications 11 ou 12, **caractérisé en ce qu'**il est conçu pour ne pas mettre en oeuvre le procédé selon l'une des revendications 1-8 pendant l'amorçage de la lampe à décharge (5).

FIG 1

FIG 2

FIG 3

FIG 4a

FIG 4b

$$F(t) = \begin{cases} 1; & t_{LE} \geq t_{LEmax} \\ 0; & t_{LE} < t_{LEmax} \end{cases}$$

FIG 4c

**IN DER BESCHREIBUNG AUFGEFÜHRTE DOKUMENTE**

**In der Beschreibung aufgeführte Patentdokumente**

- EP 1397029 A2